# EUROPEAN PATENT APPLICATION

(11) **EP 2 837 554 A1**
(43) Date of publication of application: **18.02.2015**
(21) Application number: 12834043.7
(22) Date of filing: 11.04.2012
(51) Int. Cl.: B63B 35/44, E02D 5/22, E02D 23/00, E02D 25/00, F03D 9/00

(54) **PARTIALLY FLOATING MARINE PLATFORM FOR OFFSHORE WIND-POWER, BRIDGES AND MARINE BUILDINGS, AND CONSTRUCTION METHOD**

(71) Applicant: Wong, Carlos, Macao (CN); CBJ Concrete Ocean Platform Engineering (Shanghai) Corp., Lingang Marine Science Park Pudong New Area Shanghai 201306 (CN)
(72) Inventor:
(74) Representative: Hellmich, Wolfgang
(86) International application number: PCT/CN2012/073829
(87) International publication number: WO 2013/040890

(57) **Abstract**

A partially floating marine platform for offshore wind-power, bridges and offshore buildings and a construction method are disclosed. The platform comprises at least one floater disposed vertically and with a tapered base, the floater being a hollow column; to the base thereof are added small-bore piles or small-bore driven piles fixed to the bedrock or the bearing stratum of the seabed and, together with the soil layer of the tapered base of the floater, capable of supporting external forces. The buoyancy force of the floater can counterbalance the weight of part of the building and transform a tilting load borne by the entire foundation into loads that vertically press down and pull up on a single floater foundation, by means of a spatial structure of multiple floaters. The platform is able to be cast in-situ or prefabricated onshore, assembled at coastal margins, and then towed to the installation location. The marine platform can be used in marine environments with more than 5 meters of soil layer on the sea bed and with a water depth of approximately 5 to 50 meters.

## Description

### TECHNICAL FIELD

The present application generally relates to a marine platform and a construction method thereof, and more specifically, relates to a partially floating marine platform for offshore wind-power and marine buildings, and a construction method thereof.

### BACKGROUND

Foundation types for structures standing in water are determined by geological conditions of the structures standing in water, wind-wave load, and a depth of water. Generally, the foundations for a large structure standing in water cost 25%∼40% of the total prices. For the foundations in medium to deep water depth of more than 30m, loading forces produced from the marine environment, such as great horizontal forces produced by typhoon, surge and spring tide should be taken into considerations; which in turns become vital control conditions that needs to be considered during the design and the construction.

A Chinese application of the present applicant (application NO. 2012100348059, entitled "BUOYANT SUPPORTING AND FIXING PLATFORM FOR SUPPORTING SEABORNE WIND TURBINES, BRIDGES AND MARINE STRUCTURES") discloses a marine platform, which includes at least three floaters. Wherein, each floater has a cone-shaped bottom. The marine platform is capable of being used in a marine environment with an irregularity seabed for inserting into a founding stratum which has a shallow soil stratum with a thickness of 1-5m. However, this marine platform has shortages when being used in a founding stratum which has a thick soil stratum with a thickness of more than 5m.

However, floaters in a partially floating marine platform can be supported by buoyancy provided by water. In this way, the marine platform has the benefits of a hollow floater having buoyancy that can offset up to 1/2 of its dead weight. The ballast of water inside the floater can change the base frequency of the structure so as to avoid the max wind energy spectrum earthquake energy. In this way, the foundation of the platform can be insulated from the base.

When an earthquake happens, since the inherent oscillation period has been extended with the application of buoyancy, which results in avoiding the peak period of the earthquake, the shaking acceleration of the marine buildings can be reduced. Therefore, with the marine platform, a good anti-seismic effect can be achieved.

The marine platform according to the present application aims at a marine environment with a soil stratum (having a thickness of 5-80m or more), which uses a gravity type foundation together with a small diameter piles foundation. Wherein the small diameter piles are mounted using known boring and driving piling machines which is provided on the floater which is fixed to the seabed. Compared with large diameter steel piles and the driving piling machine thereof, the machine in the present application is economic-efficient. The principle of the marine platform according to the present application may be described as follow: the marine platform is a spatial structure which is formed by a plurality of vertically disposed floaters, a plurality of horizontal beams that are connecting the floaters together, and a small diameter piles system disposed at the bottom of the floaters. In this way, the vertical load transferred to a stiffening ring plate is less than the pressure stress that the stiffening ring plate can stand, while the small diameter piles provide both a resistance to the uplifting force and bearing force. The spatial structure converts the tipping load that the foundation bears to the down force and uplifting force applied to the single floater, wherein the floater may offset the dead weight of the marine structures.

Furthermore, the present application further relates to a single-floater marine platform, which may be applied to the marine structures with a 3MW horizontal axis wind turbine.

The working principle of the single-floater marine platform is the same as that of the multi-floater platform.

The single-floater marine platform is economic-efficient for the marine environment with a flat seabed that has wind turbines, bridges or marine structures (the dead weight of which is less than 700 tons). And the construction cost may be reduced greatly.

The marine platform according to the present application may be applied to a marine environment with a water depth of 5m to 50m, and a soil stratum thickness of more than 5m.

### SUMMARY

The present patent application is directed to a partially floating marine platform for offshore wind-power and marine buildings, and a construction method thereof, aiming at a marine environment with a soil stratum thickness of 5-80m or more.

In one aspect, a partially floating marine platform for offshore wind-power, bridges and marine buildings is provided, wherein the platform is adapted for a water depth greater than 5 meters in a marine environment, comprising:
at least one hollow, cylindrical floater disposed vertically in the marine environment; the marine platform is cast on the seabed with a concrete bed below the bottom of the floater; wherein the floater is supported by a partial buoyancy force;
a plurality of small diameter piles are installed at the bottom of the floater, and the piles are penetrated through the concrete bed and the soil stratum and finally socketed into the bedrock or the founding stratum;
a single-floater platform comprises a vertically disposed floater and the small diameter piles fixed the bottom of the floaters to form a spatial structure with a signal floater; a spatial structure of a multi-floater platform is formed by connecting a plurality of vertically disposed floaters with horizontal beams, and the small diameter piles fixed to the bottom of the floaters;
wherein the marine platform is supporting wind turbines and/or bridges and/or marine buildings.

In one embodiment, the plurality of small diameter piles includes bored piles and driven pipes; the bottom the floater has a plurality of circular recess holes formed therein; each bored pile or driven pile is penetrated through the concrete bed and the soil stratum and finally socketed into the bedrock or the founding stratum.

In one embodiment, the bottom of the floater is configured into a cone-shape bottom slab or a tenon structure protruded from the bottom.

In one embodiment, the marine platform further includes at least three floaters; wherein one of the floaters is supporting offshore wind turbines.

In one embodiment, a stiffened ring slab is provided at the top of the cone-shaped bottom slab.

In one embodiment, the marine platform further includes a regulating tower section vertically disposed at the top of the floater.

In this embodiment, the floater and/or the regulating tower section are made from pre-stressed concrete, pre-stressed lightweight concrete, pre-stressed fiber reinforced concrete, pre-stressed concrete filled steel tubes or steel-concrete composite material.

In one embodiment, the interior of the floater is pre-installed with a pressure piping system that comprises a plurality of pressure pipes for pumping high pressure water or cement grout to the bottom water side of the floaters; wherein openings at one ends of the pressure pipes extend through the floaters, and are connected to a water pump or a concrete/cement grouting plant; openings at the other ends of the pressure pipes are connected to the outside.

In one embodiment, the floater is filled with water or sand to increase self-weight of the marine platform so as to counter an uplifting force induced by wind loads on the platform.

In another aspect, a construction method for installing a partially floating marine platform for offshore wind-power, bridges and marine buildings is further provided, wherein the platform is adapted for a water depth greater than 5 meters in a marine environment, the method comprises the following steps:
excavating soft materials at the seabed at a location where the at least one floaters of the platform is to be erected by one of a dredging, sucking, and flushing method so as to form a pothole in the seabed,
pouring wet concrete for forming the concrete bed into the pothole by using one of a gravity or concrete pumping method,
lowering the platform until the cone-shaped bottom slab of the at least one floater is immersed within the concrete bed prior to an initial setting of the wet concrete which forms the concrete bed, the cone-shaped bottom slab forming a mirror image, reverse cone-shaped indentation in the wet concrete of the concrete bed,
maintaining position of the platform until the wet concrete which forms the concrete bed is at an initial set where it begins to harden,
flushing out material between the cone-shaped bottom slab and the reverse cone-shaped indentation formed in the concrete bed to separate the two and create a gap therebetween by pressure pipes, raising the platform upon completion of the flushing step,
lowering the platform a second time so that the cone-shaped bottom slab contacts the reverse cone-shaped indentation formed in the concrete bed within the seabed with the gap therebetween, and
pressure grouting the gap between meeting surfaces of the cone-shaped bottom slab of the at least one floater and reverse cone-shaped indentation formed in the concrete bed so as to finally fix the marine platform to the concrete bed;
wherein a piling support arrangement extending vertically between the at least one floater and bedrock beneath the seabed is provided; wherein the providing steps include:
   installing a plurality of small diameter bored piles having a diameter of 300mm∼400mm or small diameter driven piles using known boring and driving piling technology down through the interior of the at least one floater and through a plurality of recessed holes formed in the cone-shaped bottom slab of the floater so that lower ends of the piles penetrate through the concrete bed on the seabed, soil stratum between the seabed and bedrock, to be finally socketed into the bedrock;
   dewatering the interior of the floater by pumping, or by forming a concrete plug at the lower end therein to stop water seepage prior to dewatering for a dry working environment;
   cutting upper ends of the piles to level in preparation for a known casting procedure to form a pile cap within the interior of the floater at a lower end thereof for securing the upper ends of the piles therein, an inner wall at floater lower end having a plurality of bar connectors embedded therein,
   arranging a plurality of horizontally extending reinforcement bars for the pile cap between the embedded bar connectors in the inner wall and lapping steel bar at connection points between ends of the reinforcement bars and bar connectors, and
   casting the pile cap within the floater to complete installation of the piling support arrangement.

In another aspect, a construction method for installing a partially floating marine platform for offshore wind-power, bridges and marine buildings is provided, wherein the platform is adapted for a water depth greater than 5 meters in a marine environment, characterized in that the method comprises the following steps:
floating the marine platform into position within the marine environment such that the at least one floater of the platform hovers at a desired location above soft material in the seabed,
flushing the soft material away at the desired location using the high pressure water jets through pipes in the pressure piping system until a founding stratum is reached, thereby forming a pothole which exposes the founding stratum in the seabed,
lowering the marine platform further within the marine environment so that it is directly over the pothole formed in the seabed,
pouring wet concrete for forming the concrete bed into the pothole using one of a gravity or concrete pumping method,
continue lowering the platform until the cone-shaped bottom slab of the at least one floater is immersed within the concrete bed prior to an initial setting of the wet concrete which forms the concrete bed, the cone-shaped bottom slab forming a mirror image, reverse cone-shaped indentation in the wet concrete of the concrete bed,
maintaining position of the platform until the wet concrete which forms the concrete bed is at an initial set where it begins to harden,
flushing out material between the cone-shaped bottom slab and the reverse cone-shaped indentation formed in the concrete bed using the high pressure water jets through pipes in the pressure piping system to separate the two and create a gap therebetween,
raising the platform upon completion of the flushing out step,
lowering the platform again so that the cone-shaped bottom slab contacts the reverse cone-shaped indentation formed in the concrete bed within the seabed with the gap therebetween, and
pressure grouting the gap between meeting surfaces of the cone-shaped bottom slab of the at least one floater and reverse cone-shaped indentation formed in the concrete bed using pipes in the pressure piping system so as to finally fix the marine platform to the concrete bed;
wherein a piling support arrangement extending vertically between the at least one floater and bedrock beneath the seabed is provided; wherein the providing steps include:
   installing a plurality of small diameter bored piles having a diameter of 300mm∼400mm or small diameter driven piles using known boring and driving piling technology down through the interior of the at least one floater and through a plurality of recessed holes formed in the cone-shaped bottom slab of the floater so that lower ends of the piles penetrate through the concrete bed on the seabed, soil stratum between the seabed and bedrock, to be finally socketed into the bedrock;
   dewatering the interior of the floater by pumping, or by forming a concrete plug at the lower end therein to stop water seepage prior to dewatering for a dry working environment;
   cutting upper ends of the piles to level in preparation for a known casting procedure to form a pile cap within the interior of the floater at a lower end thereof for securing the upper ends of the piles therein, an inner wall at floater lower end having a plurality of bar connectors embedded therein,
   arranging a plurality of horizontally extending reinforcement bars for the pile cap between the embedded bar connectors in the inner wall and lapping steel bar at connection points between ends of the reinforcement bars and bar connectors, and
   casting the pile cap within the floater to complete installation of the piling support arrangement.

In another aspect, a construction method for installing a partially floating marine platform for offshore wind-power, bridges and marine buildings is provided, wherein the platform adapted for a water depth greater than 5 meters in a marine environment, characterized in that the method comprises the following steps:
excavating soft materials at the seabed at a location where the at least one floaters of the platform is to be erected by one of a dredging, sucking, and flushing method so as to form a pothole in the seabed,
pouring wet concrete for forming the concrete bed into the pothole using one of a gravity or concrete pumping method,
continue lowering the platform until the cone-shaped bottom slab of the at least one floater is immersed within the concrete bed prior to an initial setting of the wet concrete which forms the concrete bed, the cone-shaped bottom slab forming a mirror image, reverse cone-shaped indentation in the wet concrete of the concrete bed,
maintaining position of the platform until the wet concrete which forms the concrete bed is at an initial set where it begins to harden,
flushing out material between the cone-shaped bottom slab and the reverse cone-shaped indentation formed in the concrete bed using the high pressure water jets through pipes in the pressure piping system to separate the two and create a gap therebetween,
raising the platform upon completion of the flushing out step,
lowering the platform again so that the cone-shaped bottom slab contacts the reverse cone-shaped indentation formed in the concrete bed within the seabed with the gap therebetween, and pressure grouting the gap between meeting surfaces of the cone-shaped bottom slab of the at least one floater and reverse cone-shaped indentation formed in the concrete bed using pipes in the pressure piping system so as to finally fix the marine platform to the concrete bed;
wherein a piling support arrangement extending vertically between the at least one floater and bedrock beneath the seabed is provided; wherein the providing steps include:
   installing a plurality of small diameter bored piles having a diameter of 300mm∼400mm or small diameter driven piles using known boring and driving piling technology down through the interior of the at least one floater and through a plurality of recessed holes formed in the cone-shaped bottom slab of the floater so that lower ends of the piles penetrate through the concrete bed on the seabed, soil stratum between the seabed and bedrock, to be finally socketed into the bedrock;
   dewatering the interior of the floater by pumping, or by forming a concrete plug at the lower end therein to stop water seepage prior to dewatering for a dry working environment;
   cutting upper ends of the piles to level in preparation for a known casting procedure to form a pile cap within the interior of the floater at a lower end thereof for securing the upper ends of the piles therein, an inner wall at floater lower end having a plurality of bar connectors embedded therein,
   arranging a plurality of horizontally extending reinforcement bars for the pile cap between the embedded bar connectors in the inner wall and lapping steel bar at connection points between ends of the reinforcement bars and bar connectors, and
   casting the pile cap within the floater to complete installation of the piling support arrangement.

In one embodiment, after fixed to the seabed, the floater is ballasted by filling the hollow interior thereof with water or sand.

In one embodiment, a steel ring is tightly adhered onto the inner wall of the pothole, wherein at least one rebar is integrated into the steel ring.

In one embodiment, a rubble wall is further formed by dumping stones around the pothole to contain the concrete poured for forming the concrete bed.

In one embodiment, the construction method further includes producing the pre-stressed concrete or pre-stressed light concrete or pre-stressed fiber reinforced concrete platform using a segmental match casting construction method, which includes:
assembling the floater with the segmental match casting construction method in a factory or casting yard;
transporting the floater to the harbor site;
floating out the floater to the marine environment, and carrying out the construction of the foundation of the platform.

In one embodiment, the construction method further includes producing the pre-stressed concrete or pre-stressed light concrete or pre-stressed fiber reinforced concrete platform using a segmental match casting construction method, which includes:
segmental match casting, in a factory or casting yard, a plurality of first segments to be assembled into a hollow, cylindrical floater to be disposed vertically in the marine environment, the assembled marine platform to include a plurality of floaters,
segmental match casting, in the factory or casting yard, a plurality of second segments to be assembled into an elongate horizontal beam to connected between adjacent floaters, the assembled marine platform to include a plurality of horizontal beams,
installing, at the harbor site, at least three guiding piles for each floater at the location of where the floater is to be assembled, to be used as a confining mechanism for confining a first segment into position and supporting the weight thereof by an overhead frame/truss,
transporting the plurality of first segments to the harbor site, lifting, by use of a floating crane, a first segment that is to be the bottom segment of the to-be-assembled floater into position, guided by the guiding piles, the bottom first segment being floatable under its own weight and the weight of an immediate first segment placed on top of it,
lifting a next first segment onto the bottom first segment and using pre-stressing to join this next first segment to the bottom first segment,
repeating the processes of lifting and joining for subsequent first segments to complete the assembling of the floater, each of the assembled floaters including one or more joints for connection to one or more horizontal beams,
hanging a completed floater so that it extends vertically from the overhead frame/truss and is restrained by the guiding piles,
transporting the plurality of second segments to the harbor site,
assembling the second segments by the use of pre-stressing to join the second segments together so as to form the horizontal beam,
lifting, by use of a floating crane, each formed horizontal beam onto a temporary support on the guiding piles,
fixing steel bars in the floaters and horizontal beams and thereafter lapping the
steel bars,
casting the joints where ends of horizontal beams meet a floater with in-situ concrete until all beams are fixed to the floaters,
removing the overhead frame/truss and guiding piles,
floating out the assembled marine platform into the marine environment, and
optionally installing a wind turbine on top of one of the floaters of the platform.

In one embodiment, a hole with a diameter of 45-55mm is defined in the cone-shaped bottom slab of the floater; wherein the hole extends through the concrete bed, and has a rebar inserted therein; the hole is further poured with wet concrete.

In one embodiment, the platform with a plurality of floaters is connected together with horizontal beams to form a multi-floater platform.

The partially floating marine platform for offshore wind-power, bridges and marine buildings according to the present application are adaptable for different water depths and different seabed conditions, wherein:

In the marine environment with a soil stratum thickness of more than 5m, a single gravity floater or a plurality of floaters may be fixed to the bedrock or founding stratum with the small diameter piles, improving the resistance to the uplifting force and the stability of the marine platform. In this way, the construction cost for the marine platform in a marine environment with a soil stratum thickness of more than 5m, and a water depth of 5-30m may be reduced. In general, the construction of the marine platform in the marine environment with a water depth of 20m cost 20%∼30% less than that of the marine platform with conventional piles system.

For the marine environment with medium depth water, a gravity type foundation together with a small diameter piles foundation may be used.

Since the floater of the marine platform according to the present application is fixed to the bedrock or founding stratum with the help of the small diameter piles, the dimension of the partially floating marine platform according to the present application is smaller than that of the floating marine platform. Therefore, the construction cost of the platform in the marine environment with a soil stratum thickness of more than 5m and a water depth of 5-30m may be greatly reduced. Besides, the marine space resources can be saved, the scientific usage of the marine area can be facilitated; and the safety for sailing can be improved. The construction of the platform is a manual operation over water, and the rods of the platform are precast, which makes the time occupied by the on-site operation short. The foundation of the platform and that of the seabed are constructed and installed by the remote control over water. In this way, the most difficult problems that, complicated and heavy constructing devices are needed for the underwater foundations such as open caissons; and that the manual installation under water is dangerous can be solved. The production cost of the constructing devices is low, and the constructing devices can be reused; thereby, the work efficiency can be improved, and the constructing method is safe, with low risk and low cost, and is applicable to the foundation engineering for the seaborne wind turbines and/or the bridges and/or the marine structures.

### ATTACHED DRAWINGS

The present invention will be further described with reference to the accompanying drawings and embodiments in the following, in the accompanying drawings:
FIG. 1 is a perspective view of a marine platform in a marine environment supporting a wind turbine thereon, according to an example embodiment.
FIG. 2A is a front view of an example floater of the marine platform.
FIG. 2B is a bottom view of the cone-shaped bottom slab of floater 1.
FIG. 2C is an enlarged, front view of a lower section of floater 1.
FIG. 3 is a bottom view of the marine platform in another configuration, according to an example embodiment.
FIG. 4 is a side view of a marine platform with piling support in a marine environment, according to another example embodiment.
FIG. 5 is a side view to illustrate dredger operations in the marine environment to describe a step of excavating a seabed.
FIG. 6 is a side view to illustrate a step of concrete bed forming operations in the seabed of the marine environment.
FIG. 7A is a side view of a single-floater platform to illustrate a step of hovering platform just above the concrete bed.
FIG. 7B is a side view illustrating a step of lowering of the single-floater platform into the concrete bed 9 to form a mirror-image reversed cone indentation in the concrete bed with the cone-shaped bottom slab.
FIG. 8A is a side view of the single-floater platform to illustrate a step of raising the platform to reveal the mirror-image reversed cone indentation in the concrete bed.
FIG. 8B is a side view of the single-floater platform to illustrate a step of again lowering the platform to rest the cone-shaped bottom slab in the mirror-image reversed cone-shaped indentation.
FIG. 9A is a side view of a marine platform fixed to a concrete bed to illustrate a step of installing a small diameter pile with a boring plant.
Fig. 9B is a further side view of a marine platform fixed to a concrete bed to illustrate a step of installing a small diameter pile with a boring plant.
FIG. 10A shows a boring plant executing boring of a pile using a casing from the top end of a marine platform.
FIG. 10B shows a piling plant driving a pile downward through a casing from the top of a marine platform.
FIG. 11 is a side view of a platform fixed to a concrete bed with a complete piling support arrangement.
FIG. 12 is a perspective view which shows installation of a bridge pier supported on a marine platform, according to another example embodiment.
FIG. 13 is a perspective view which shows installation of a marine building supported on a marine platform, according to another example embodiment.
FIG. 14 is a top view illustrating a multi-platform concept comprising a number of interconnected modules.

### PARTS LIST

1. Floater; 2. Cone-shaped bottom slab; 3. Regulating tower section; 4. Stiffened ring slab; 5. Wind turbine tower; 6. Seabed; 7. Rubble wall; 8. Sea surface; 9. Concrete bed; 10. Partially floating supported marine platform; 11. Cone-shaped indentation; 12. Cement grout or simply grout; 13. Soil stratum; 14. Founding stratum; 15. pothole; 17. Pile cap; 21. Small diameter bored piles; 22. Dredging arm; 23. Dredger; 24. Boring machine; 26. Operation vessel; 27. Small diameter driven piles; 28. Piling machine; 31. Tremie concrete pipe; 32. Primary horizontal beam; 34. Secondary horizontal beam; 35. Bridge Pier; 36. Capping beam; 37. Pressure pipe; 38. Opening; 39. Recess hole; 40. Bedrock

### DETAILED DESCRIPTION

The present invention will be further described with reference to the accompanying drawings and embodiments in the following, in the accompanying drawings:

In order to explain clearly the intension of the present patent application, detailed description is now given as follow:

### Work example 1

The intention is to install a partially floating marine platform 10 for offshore wind-power, bridges and marine buildings (named as marine platform 10 for short) as described in the present application in a seabed that is in an open sea with a water depth of 25m and a thickness of soil stratum of 30m, for the support of a 3MW horizontal axis wind turbine 5.

The marine platform 10 constructed in accordance with the present application has the benefits of a hollow floater 1 having a buoyancy that can offset up to 1/2 of its dead weight. The ballast of water inside the floater 1 can change the base frequency of the structure so as to avoid the max wind energy spectrum earthquake energy. In this way, the foundation of the platform can be insulated from the base.

When an earthquake happens, since the inherent oscillation period has been extended with the application of buoyancy, which results in avoiding the peak period of the earthquake, the shaking acceleration of the marine buildings can be reduced. Therefore, with the marine platform 10, a good anti-seismic effect can be achieved.

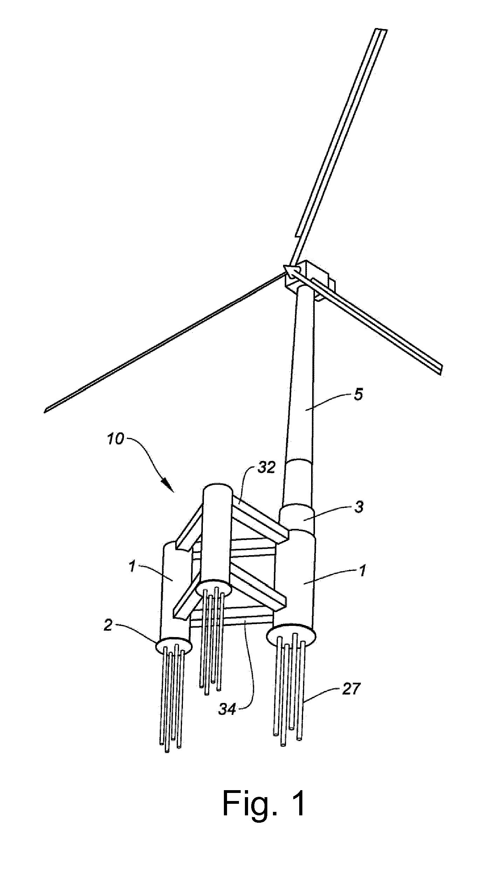

Fig.1 shows a marine platform 10 of the present patent application. As shown in Fig.1, the marine platform 10 includes three vertically disposed floaters 1, which are hollow cylinders supported by a partial buoyancy force. A plurality of small diameter bored piles 21 or small diameter driven piles 27 are installed at the bottom of each of the floaters 1. The floaters 1 are anchored to the bedrock 40 or the founding stratum 14 with the small diameter bored piles 21 or small diameter driven piles 27. The floaters 1 are in form of hollow columns, such as tetrahedral columns, hexahedral columns, or the like. In this case, a bottom slab 2 of the floater 1 may be in a conic shape (inverted cone). However, the bottom slab of the floater may be a tenon protruded therefrom.

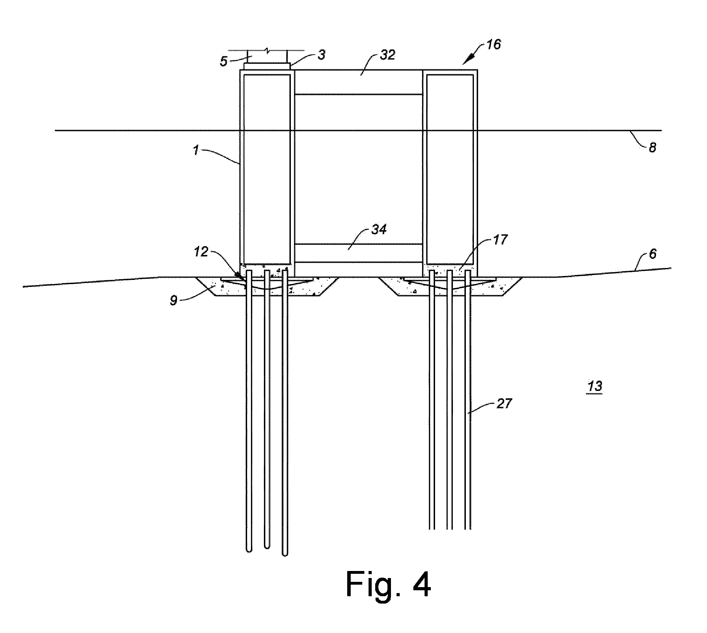

As shown in Figs.1, 2 and 4, the inner face of bottom slab 2 of the floater 1 has a plurality of circular recess holes 39 formed therein. Each pile 21 or 27 is guided down into the interior of the floater 1 and through these recess holes 39, so as to penetrate into and through the concrete bed 9 and the soil stratum 13, with lower ends of piles 27 thereof to be finally socketed into the bedrock 40 or the founding stratum 14. Therefore, the marine platform 10 can well resist the uplifting force.

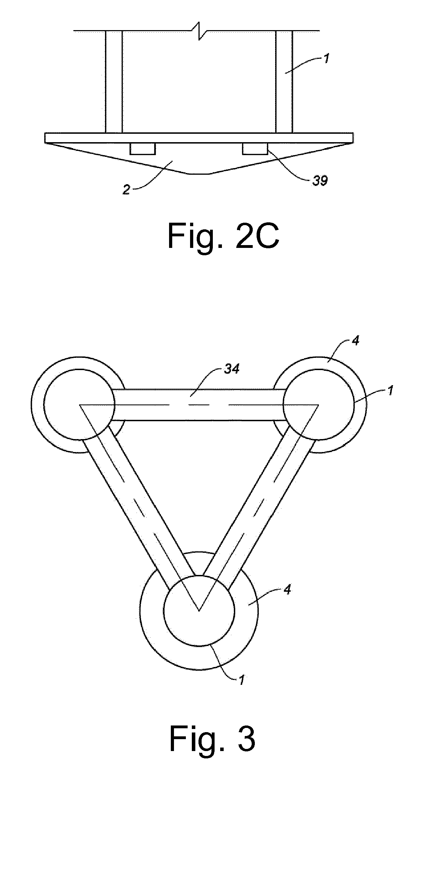

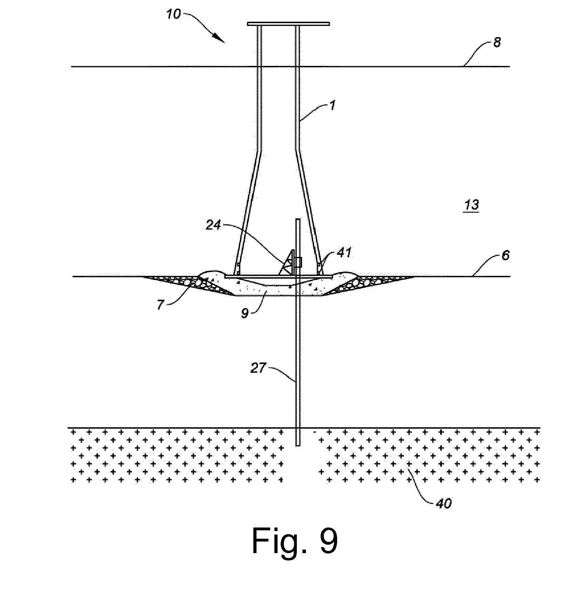

As shown in Fig.3, three floaters 1 are inter-connected with beams 32 and 34 to form a platform 10. Wherein, one of the floaters 1 is installed with a 3MW horizontal axis wind turbine 5. It is also possible to use one single floater 1 to form the platform 10, as shown hereafter in Fig.9B. A single-floater platform comprises a vertically disposed floater 1 and a stiffened ring slab 4 at the bottom of the floater 1/or with or without the small diameter bored piles 21 or driven piles 27 in group fixed the bottom of the floaters 1. In the case of a multi-floater platform, a spatial structure is formed by connecting a plurality of vertically disposed floaters 1 with horizontal beams 32 and 34, with or without the small diameter bored piles 21 or driven piles 27 in group fixed to the bottom of the floaters 1.

As shown in Fig.1, a marine platform 10 is configured in a triangular shape in plan. However, the example is not limited, as marine platform 10 may be configured in other shapes, such as square, rectangle, pentagon, hexagon, etc. The cross-section of the floater 1 can also be a polygon, such as a pentagon or a hexagon, other than a circle. Additionally, in this figure, a sea surface 8 is shown for reference.

In this work example, the dimension and member sizes may be taken as follow: a height of the floater 1 is 30m; a wall thickness of the floater 1 is 0.35m to 0.45m; a thickness of top slab is 0.35m to 0.5m; and a thickness of the cone-shaped bottom slab 2 is 0.35m to 0.6m.

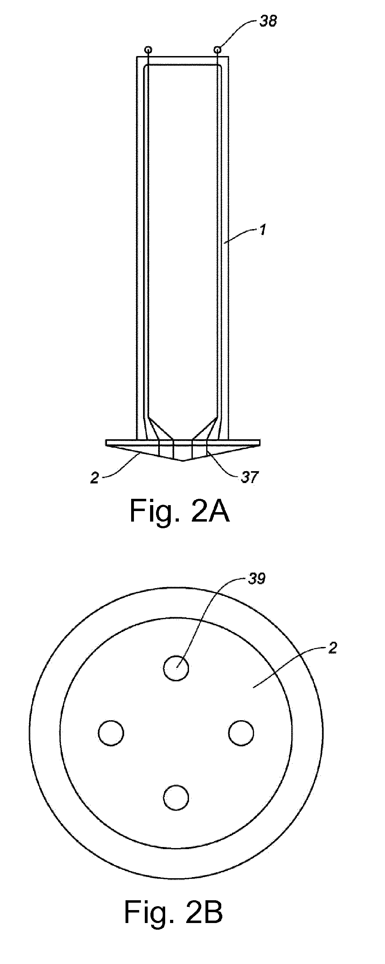

As shown in Fig.2, the marine platform 10 consists of hollow cylindrically-shaped floaters 1. However, the floater 1 can be of a tapered shape with its bottom diameter greater than the top diameter to increase stability and reduce the bearing pressure on the bearing stratum. In other embodiments, the floater 1 may be in shape of a tetrahedral column, a hexahedral column, or the like. Furthermore, the stiffened ring slab 4 can be added to the bottom of the floater 1 to increase the surface area further, in order to reduce further the bearing pressure. The floaters 1 can be steel pontoons, and can also be hollow columns made from concrete. For example, the floaters 1 can be made from pre-stressed concrete, pre-stressed lightweight concrete, pre-stressed fiber reinforced concrete, pre-stressed concrete filled steel tubes or steel-concrete composite material. Wind turbines can be mounted on the floaters 1.

As shown in Fig.1, the marine platform 10 further includes a regulating tower section 3 vertically disposed on the top of the floater 1 that support the wind turbine. The height of the regulating tower section 3 should be extended above the max designed wave height in the marine environment. However, the height of the regulating tower section 3 can be preset, in terms of the differential between the water depth and the floater 1, so that the floater 1 can be adapted to an open sea with different water depth. In this case, the height of the regulating tower section 3 is 10m, which may be made from pre-stressed concrete, pre-stressed lightweight concrete, pre-stressed fiber reinforced concrete, pre-stressed concrete filled steel tubes or steel-concrete composite material. Preferably, in this case, the regulating tower section 3 is made from steel-concrete composite material. The wind turbine is mounted on the regulating tower section 3 with a flange.

In the implementation work example, as shown in Figs.2A, 2B and 2C, the interior of the floater 1 is pre-installed with a pressure piping system that comprises a plurality of pressure pipes 37 for pumping high pressure water (via one or more openings 38 arranged at the top of the floater 1 connected to a water source) or cement grout (via openings 38 connectable to a cement grout source) to the bottom water side of the floaters 1. The pumping of high pressure water jets or cement grout may be done by coupling the inlet (openings 38) with a water pump or a concrete/cement grouting plant. The outlets of the pressure pipes 37 are at the water side of the bottom slab 2. The pressure pipes 37 are used to flush the seabed and to flush open a gap that is formed between the cone-shaped bottom slab 2 and the concrete bed 9. The opening 38 are extended through the floaters 1. For the floater 1 equipped with the regulating tower section 3, the opening 38 is extended through the regulating tower section 3.

Specifically, high pressure water or concrete/cement grout from the respective plant may be pumping to outside from the opening of the pressure pipe 37 that is at the water side of the bottom slab 2, running through the pressure pipe 37. To further improve its stability, the floater 1 may be filled with water or sand. It should be understood that, the fillers are not limited to the water or the sand, and can be any material that has higher specific gravity; and thus the dead-weight of the marine platform 10 can be increased.

Additionally, for a 3MW horizontal axis wind turbine, a steel tower 5 thereof will have a height of approximately 65m; the nacelle is placed on top of towers and the weight of the horizontal axis wind turbine is 400t to 700t.

In addition, air can be contained in the hollow region of the hollow components, so that additional buoyancy can be provided to the platform 10 when the platform 10 transported on the sea. After the platform 10 is fixed, in order to resist the upward pulling force produced by the wind force, material with lager specific gravity, such as water and/or sand and/or concrete can be filled in the hollow components, so that the dead-weight of the platform can be increased. The inner face of bottom slab 2 of the floater 1 has a plurality of circular recess holes 39. Each pile 21 or 27 is mounted in these recess holes 39. The small diameter bored piles 21 are anchored to the bedrock, and the small diameter driven piles 27 is guided down into the concrete bed 9 below the floater 1 through the recess hole 39, so that the marine platform 10 can resist the uplifting force and down force caused by wind load.

In the work example 1, during the design of the marine platform 10 for wind turbine support, one key issue is to resist the uplifting force in the floater 1 induced by a huge overturning moment. In the calculation, the small diameter bored piles 21 may have a diameter of about 0.3m, the portion of the pile 27 that is embedded length into bedrock have a length of 3m, and reinforcement bars for a pile cap to be formed within the floater 1 are 3×50 mm, high pressure grouted mini-pile. A horizontal load on platform 10 is resisted by the stiffened ring slab 4 which translates the force to the concrete bed 9, which in turn translates the frictional force between the concrete bed 9 and the founding stratum 14 into the bearing stratum 13.

### Work example 2

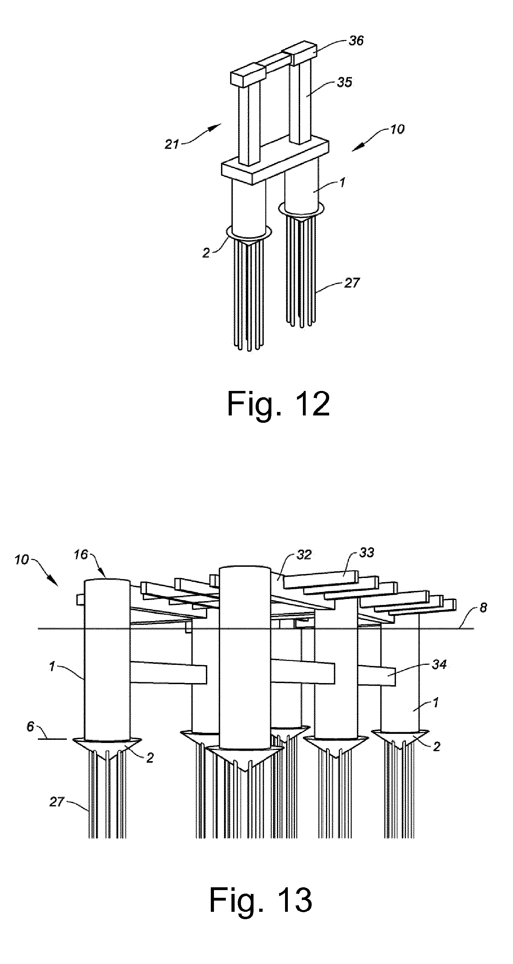

The marine platform 10 is further capable of supporting bridges. As shown in Fig. 12, two floaters 1 are fixed to the marine platform 10 by which a foundation of bridge is formed. It should be understood that, three or six satellite buoyant tubes 1 may be arranged axis symmetrically. Fig.12 further shows a bridge pier is supported on a platform 10. The bridge pier 35 is in turn supported by two floaters 1 and the small diameter piles system (including small diameter bored plies 21 and small diameter driven plies 27). A capping beam 36 is provided on the bridge pier 35. In this case, the floater 1 may have a diameter of 8m, a height of 30m, a wall thickness of 0.4m for the open sea with a water depth of 30m, and a soil/sand layer thickness of 25m. Small diameter bored piles 21 is socketed into bedrock 40 or founding stratum 14.

### Work example 3

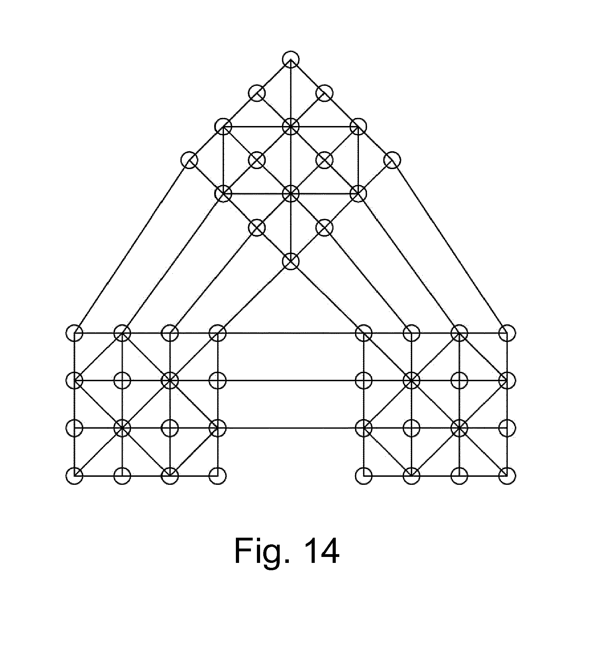

The marine platform 10 is further capable of supporting marine buildings. As shown in Fig. 13, the marine platform 10 is configured in a grid formation with a plurality of floaters 1 located respectively at the nodes of the grid. The main structure frame is formed by connecting main (primary) beams 32 arranged horizontally between adjacent floaters 1 at upper ends thereof, and connecting optional main (secondary) beams 34 arranged horizontally between adjacent floaters 1 at lower ends thereof. A plurality of additional beams 33 branch out to suit the building layout. A plurality of marine platforms 10 may be provided to form a multi-platform system. As shown in Fig. 14, for example, three marine platforms 10 with sixteenth floaters may form a multi-platform system.

In this case, a basic module for an offshore building platform may include four cylindrical floaters 1 supporting a grid of beams 30m×30m overall. The sizes of the platform may be increased by combining a number of the basic modules. In this work example, the dimension and sizes of structural members comprising the marine platform 10 may be provided in an open sea with a water depth of 30m, and a soil/sand stratum thickness of approximately 20m. Floater 1 has a diameter of 8m, a height of 30m, and a wall thickness of 0.4-0.5m. And the top slab 16 and the bottom slab 2 have a thickness of 0.4-0.6m. The conical-shaped bottom slab has a diameter of 10m, a height of 3m. The primary horizontal beam 32 and the secondary horizontal beam 34 have a width of 3m, a height of 4m, and a thickness of 0.35m to 0.5m. The additional beam 33 has a width of 1.5m, a height of 2m, and a thickness of 0.25m. Additionally, the top of the floater is connected to a sealing hollow box of the overwater structures, which together form a submerged structure, and provide extra buoyancy.

### Work example 4

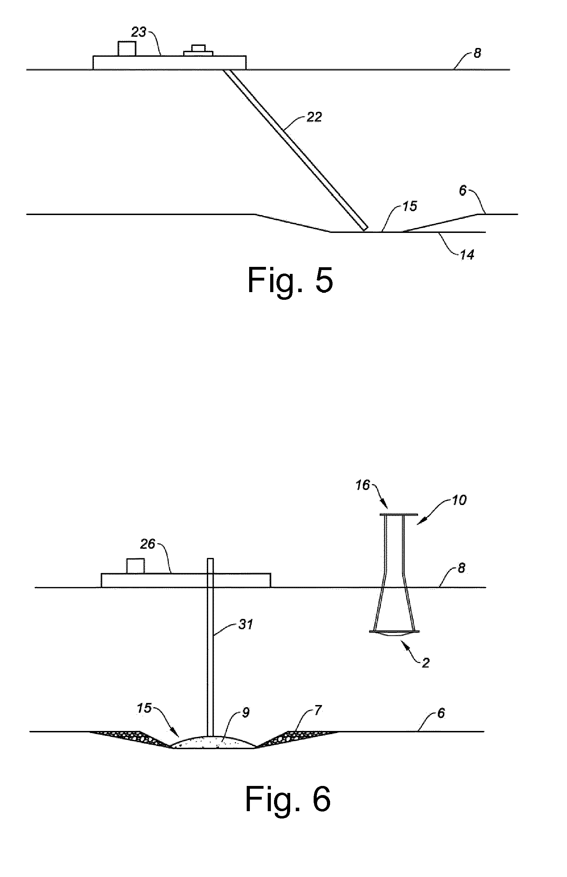

Figs.5-11 are provided to aid in understanding a construction method for installing the marine platform 10 in the marine environment for supporting offshore wind turbines, bridges and marine buildings. In particular, Figs.5-11 illustrate steps in the construction method for the installation of a tapered, single floater platform 10 fixed on the seabed.

Specifically, when constructing the marine platform according to the present application, the pre-stressed concrete or pre-stressed light concrete or pre-stressed fiber reinforced concrete platform is produced using a segmental match casting construction method, which includes: assembling the floater with the segmental match casting construction method in a factory or casting yard; transporting the floater to the harbor site; and floating out the floater to the marine environment, and carrying out the construction of the foundation of the platform.

Or the pre-stressed concrete or pre-stressed light concrete or pre-stressed fiber reinforced concrete platform is produced using an in-situ concrete casting construction method. In this case, the platform may be cast and assembled on land. Only after that, the platform is further floated out the assembled marine platform into the marine environment.

The construction method for the foundation of the floater includes the following steps:

In step S101, as shown in Fig.5, soft material at the seabed 6 at a location where at least one floater is erected is excavated by dredging, sucking or flushing methods so as to form a pothole 15. In this case, a dredging arm 22 from a dredger vessel 23 on the water surface 8 is extending down to the seedbed 6 to carry out the excavation of the seabed 6. A pothole 15 is formed in seabed 6 due to the excavation thereof. The seabed is explored before the excavation, so as to obtain the thickness of the soil stratum 13, to confirm whether small diameter bored piles 21 or small diameter driven piles 27 are needed. To prevent the soft soil from collapsing, a steel ring 18 is tightly adhered onto the inner wall of the pothole 15, and at least one rebar is integrated into the steel ring.

As shown in Fig.6, an operation vessel 26 on the water surface 8 is employing a tremie concrete pipe 31 that extends between the operation vessel 26 and the pothole 15 to pour concrete in the pothole 15, so as to form a concrete bed 9 confined by the rubble wall/mount 7 (built up on sides of pothole 15 with rocks and gravels in advance), and at the same time a single-floater marine platform 10 is shown being floated in at water surface 8. In this case, the rubber wall 7 is configured for preventing the soil stratum from collapsing into the pothole 15. The concrete bed 9 is located between the cone-shaped bottom slab 2 and the founding stratum 14. And the pothole 15 has a diameter larger than that of the cone-shaped bottom slab 2. In other cases, the bottom slab may be configured into other shapes.

In step S102, as shown in Fig.6, the marine platform 10 is transported to the mounting location by a sea towage, and the platform 10 is adjusted to make the floater 1 aligned with the pothole 15 in vertical direction.

In step S103, as shown in Fig.6, the marine platform 10 is lowered, the wet concrete is poured by gravity method or by pumping concrete method into the pothole 15 to form a concrete bed 9.

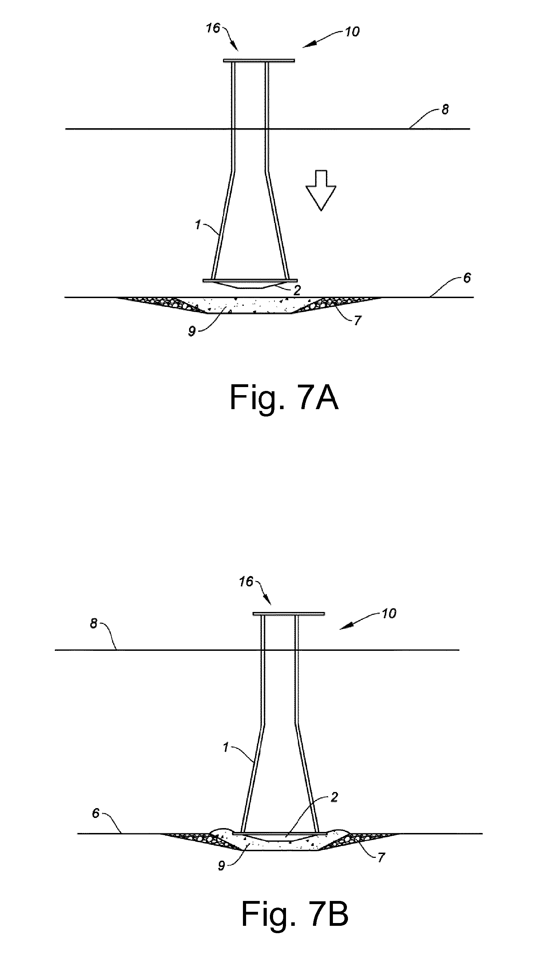

In step 104, the marine platform 10 is lowered until the cone-shaped bottom slab 2 is completely immersed the tremie concrete bed 9 prior to an initial setting of the wet concrete that forms the concrete bed 9, so as to form a mirror-image reversed cone indentation in concrete bed 9 that corresponds to the cone-shaped bottom slab 2. Specifically, in FIG. 7A, prior to the concrete being set, the platform 10 is lowered so as to hover above the concrete bed 9 in the seabed 6. As shown in FIG. 7B, the platform 10 has been further lowered so as to be at a design level, with the cone-shaped bottom slab 2 completely immersed within the still wet concrete bed 9.

In step S105, the position of the platform is maintained until wet concrete which forms the concrete bed is at an initial set where it begins to harden. And the material between the con-shaped bottom slab and the reverse cone-shaped indentation formed in the concrete bed to separate the two and create a gap therebetween. The marine platform 10 is raised upon completion of flushing step. After that, the marine platform 10 is lowered a second time so that the cone-shaped bottom slab contacts the reverse cone-shaped indentation formed in the concrete bed within the seabed with the gap therebetween.

Finally, the gap between meeting surfaces of the con-shaped bottom slab of the at least one floater is pressure grouted. And the reversecone-shaped indentation formed in the concrete bed is also pressure grouted, so as to fix the marine platform to the concrete bed.

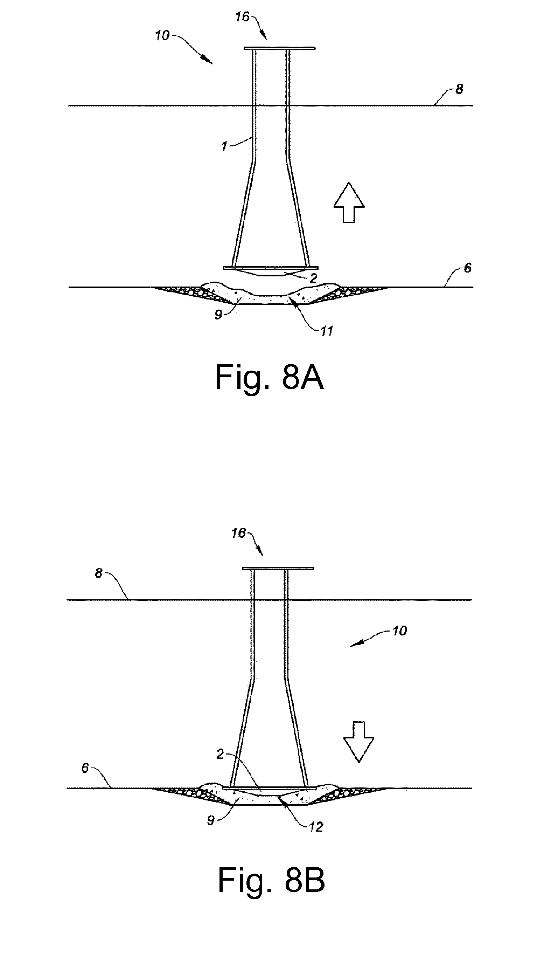

Specifically, as shown in Fig.8A, a step of raising the platform to reveal the mirror-image reversed cone indentation in concrete bed 9 is shown. While FIG. 8B shows a side view of the single-floater platform 10 to illustrate a step of again lowering the platform 10 so that the cone-shaped bottom slab 2 rests in the mirror-image reversed cone-shaped indentation 11. The position of the platform 10 is maintained on the concrete bed 9 until the wet concrete which forms the concrete bed 9 is at an initial set where it begins to harden. Thus, as shown in FIG. 8A, the platform 10 is thereafter raised once the concrete in the concrete bed 9 has set (hardened), leaving a mirror-image reversed cone-shaped indentation 11 in the concrete bed 9. In FIG. 8B, the platform 10 is lowered again to rest on the concrete bed 9 with the cone-shaped bottom slab 2 fitting snugly in the mirror-image reversed cone indentation 11 in concrete bed 9.

Any material that is present between the cone-shaped bottom slab 2 and the reverse cone-shaped indentation 11 is then flushed out using the high pressure water jets through pipes 37 in the pressure piping system to separate the two and create a gap therebetween. Once flushing is completed, the platform 10 is again raised, then lowered so that the cone-shaped bottom slab 2 contacts the reverse cone-shaped indentation 11 with the gap therebetween. The gap present between the two faces or meeting surfaces of the cone-shaped bottom slab 2 and reverse cone-shaped indentation 11 is then subject to pressure grouting with cement grout 12. This is done using the pipes in the pressure piping system so as to finally fix the marine platform 10 to the concrete bed 9.

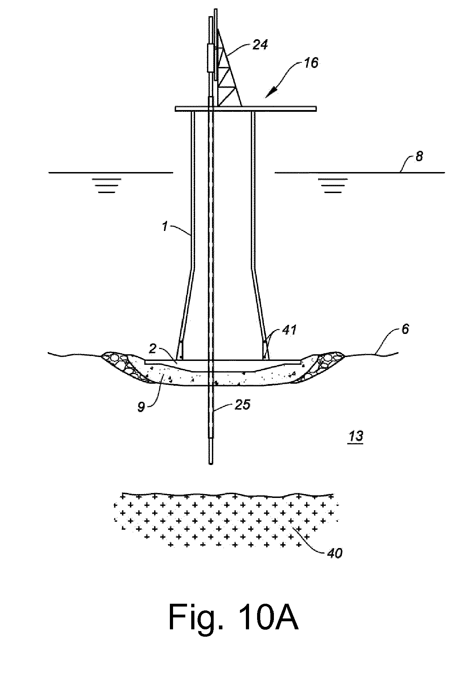

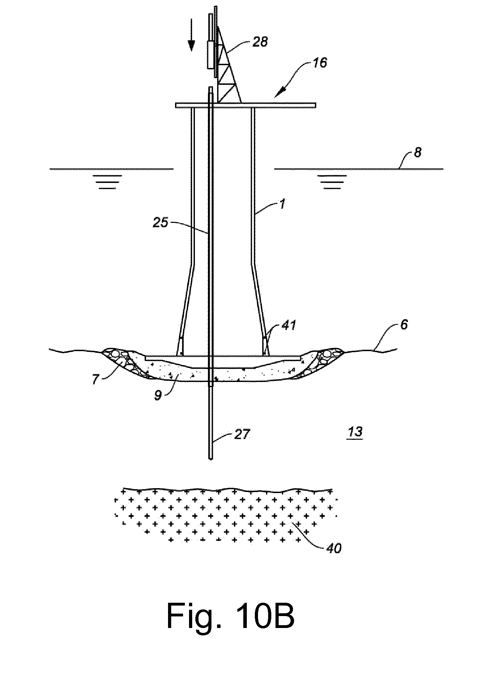

Finally, Figs.9A and 9B are provided to illustrate an optional process in the construction method to provide a piling support arrangement for the fixed marine platform 10. In FIG. 9A, which is a side view of the platform 10 fixed to the concrete bed 9, there is shown a small diameter bored pile 21 being installed with a small boring machine 24 situated within the interior of floater 1 at the bottom thereof. This is done for each pile 21. Wherein, the pile 21 has a diameter of 300mm∼400mm. As is known, the boring machine 24 is used for installing a pile by a boring action to bore a hole in the concrete bed 9 and soil/sand stratum 13, with or without a casing 25 (see Fig.10) depending on the soil properties. Typically, a casing 25 will be used in the top region of the soil/sand stratum 13. Accordingly, a hole is bored through the concrete bed 9 and soil/sand stratum 13 so that the pile 27 may be extended down through a recess hole 39 in the cone-shaped bottom slab 2 to penetrate the concrete bed 9, soil/sand stratum 13 and finally to be socketed into bedrock 40. FIG.9A also initially illustrates steel bar connectors (a mechanical connector, not labeled) which are embedded in the interior wall of the bottom segment of the floater 1 at time of casting the bottom segment at the factory. As will be shown in Fig.9B, ends of a plurality of pile cap reinforcement bars 42 are connected (via short steel bars 48) and fixed to these embedded bar connectors prior to casting of the pile cap 17 within the interior of floater 1. In sum up, in this case, a piling support arrangement extending vertically between the at least one floater and bedrock beneath the seabed is provided; wherein the providing steps include: installing a plurality of small diameter bored piles 21 having a diameter of 300mm∼400mm or small diameter driven piles 27 using known boring and driving piling technology down through the interior of the at least one floater and through a plurality of recessed holes 39formed in the cone-shaped bottom slab 2 of the floater so that lower ends of the piles penetrate through the concrete bed 9 on the seabed, soil stratum between the seabed and bedrock, to be finally socketed into the bedrock 40; dewatering the interior of the floater 1 by pumping, or by forming a concrete plug at the lower end therein to stop water seepage prior to dewatering for a dry working environment; cutting upper ends of the piles to level in preparation for a known casting procedure to form a pile cap within the interior of the floater at a lower end thereof for securing the upper ends of the piles therein, an inner wall at floater lower end having a plurality of bar connectors embedded therein; arranging a plurality of horizontally extending reinforcement bars for the pile cap between the embedded bar connectors in the inner wall and lapping steel bar at connection points between ends of the reinforcement bars and bar connectors; and casting the pile cap within the floater to complete installation of the piling support arrangement.

In step S106, a wind turbine tower 5 is mounted on the marine platform 10.

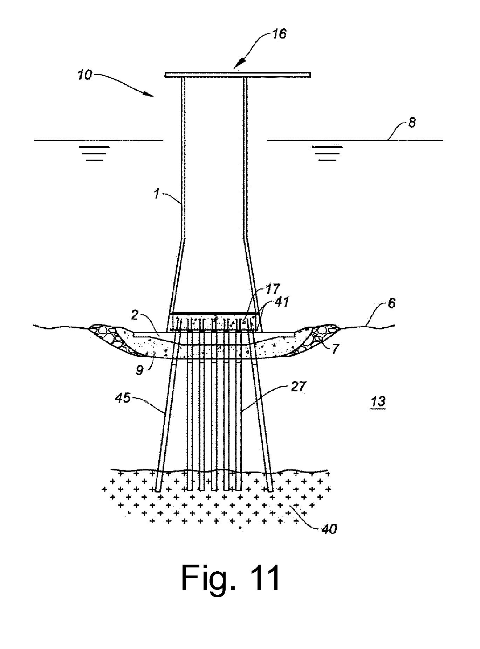

According to other embodiments of the present application, as shown in Figs. 10A and 10B, the boring machine 24 is executing boring of a pile 27 using a casing 25 from the top end of the platform 10. Fig. 10B shows a piling machine 28 driving a pile 27 downward through the casing 25 from the top of the platform 10. As is known, the piling machine 28 could be embodied as a boring plant or percussion plant and is used to drive a pile into the soil/sand stratum 13 and bedrock 40 by force. As shown in Fig.11, a pipe cap 17 is provided at the bottom of the floater 1. And a group of small diameter pile 27 extends through the cone-shaped bottom slab 2 and the concrete bed 9 finally installed in the soil stratum 13with short length of pile casing bring grouted 12 left in the pile cap 17.

In the case without pipe foundation, a hole with a diameter of 45-55mm extending to the concrete bed 9 is defined in the cone-shaped bottom slab 2. Preferably, the diameter of the hole is 50mm. Rebar is inserted into the hole which is poured with cement mortar after that.

The construction method for the marine platform may be applied to platform provided in an open sea with a soil stratum thickness more than 5m, and with a bedrock 40 or founding stratum 14 less than 5m.

### Work example 5

The construction method for the marine platform 10 includes the following steps:

In step S201, the marine platform 10 is floated into the erecting position.

In step S202, the marine platform 10 hovers at a desired location above the soft material in the seabed 6. Then the high pressure water jets from the pipes are used to flush the soft material away until a founding stratum 14 is reached. A pothole 15 is formed when the soil material of the seabed is carried to the founding stratum 14. In this case, the seabed is explored before the excavation, so as to obtain the thickness of the soil stratum 13, to confirm whether the founding stratum 14 is reached.

In step S203, the marine platform 10 is further lowered within the marine environment so that it is directly over the pothole 15 formed in the seabed. Then the wet concrete is poured into the pothole by gravity method or by pumping concrete method so as to form a concrete bed 9. In this case, a built-in concrete down pipe provided in the floater 1 is used to pour the wet concrete into the water jet cleared potholes 15 to form the concrete bed 9.

In step S204, the marine platform 10 is continually lowered until the bottom cone-shaped slab 2 is completely immersed within the concrete bed 9 prior to an initial setting of the wet concrete that forms the concrete bed 9. The level and position of the platform 10 is adjusted and maintained to allow the concrete pour to completely cover the cone-shaped bottom slab 2, until the wet concrete is at an initial set where it begins to harden.

In step S205, material between the cone-shaped bottom slab and the reverse cone-shaped indentation formed in the concrete bed is flushed out using the high pressure water jets through pipes in the pressure piping system to separate these two. And thus, a gap is formed therebetween. Then the platform 10 is raised upon the completion of the flushing out step.

In step S206, after the concrete bed 9 (with mirror image, reverse con-shaped indentation 11) has cured so as to reach its design strength, the marine platform 10 is then lowered again so that the cone-shaped bottom slab contacts the reverse cone-shaped indentation formed in the concrete bed within the seabed with the gap therebetween.

In step S207, the gap between meeting surfaces of the cone-shaped bottom slab of the at least one floaters and the reverse cone-shaped indentation 11 formed in the concrete bed are pressure grouted using pipes in the pressure piping system, so as to finally fix the marine platform to the concrete bed 9.

In one case, a recess hole 39 pre-formed in the top face of bottom slab of the floater 1 has been provided. In this case, the bored piles 21 having a diameter of 300mm∼400mm or the driven piles 27 penetrate into the recess hole 39.

In step S208, offshore wind turbines, and/or bridges and/or marine buildings are mounted on the marine platform 10.

### Work example 6

The construction method for the marine platform 10 includes the following steps:

In step S301, soft material at the seabed 6 at a location where at least one floater are erected is excavated by dredging, sucking or flushing methods so as to form a pothole 15.

In step S302, the marine platform 10 is transported to the mounting location by a sea towage, and the platform 10 is adjusted to make the floater 1 aligned with the pothole 15 in vertical direction.

In step S303, the marine platform 10 is further lowered within the marine environment so that it is directly over the pothole 15 formed in the seabed. Then the wet concrete is poured into the pothole by gravity method or by pumping concrete method so as to form a concrete bed 9. In this case, a built-in concrete down pipe provided in the floater 1 is used to pour the wet concrete into the water jet cleared potholes 15 to form the concrete bed 9.

In step S304, the marine platform 10 is continually lowered until the bottom cone-shaped slab 2 is completely immersed within the concrete bed 9 prior to an initial setting of the wet concrete that forms the concrete bed 9. The level and position of the platform 10 is adjusted and maintained to allow the concrete pour to completely cover the cone-shaped bottom slab 2, until the wet concrete is at an initial set where it begins to harden.

In step S305, material between the cone-shaped bottom slab and the reverse cone-shaped indentation formed in the concrete bed is flushed out using the high pressure water jets through pipes in the pressure piping system to separate these two. And thus, a gap is formed therebetween. Then the platform 10 is raised upon the completion of the flushing out step.

In step S306, after the concrete bed 9 (with mirror image, reverse con-shaped indentation 11) has cured so as to reach its design strength, the marine platform 10 is then lowered again so that the cone-shaped bottom slab contacts the reverse cone-shaped indentation formed in the concrete bed within the seabed with the gap therebetween. The gap between meeting surfaces of the cone-shaped bottom slab of the at least one floaters and the reverse cone-shaped indentation 11 formed in the concrete bed are pressure grouted using pipes in the pressure piping system, so as to finally fix the marine platform to the concrete bed 9.

In step S307, offshore wind turbines, and/or bridges and/or marine buildings are mounted on the marine platform 10.

After the floater 1 has been fixed to the seabed 6, water, sand or concrete may be filled into the floater 1.

The present application also provides a method of assembling the marine platform 10 at a harbor site. The method includes a step of segmental match casting, in a factory or casting yard, of a plurality of first segments to be assembled into the hollow, cylindrical floater (i.e., floater 1) to be disposed vertically in the marine environment. In an example, the assembled marine platform 10 may include a plurality of floaters 1. Additionally, the method includes segmental match casting, in the factory or casting yard, of a plurality of second segments to be assembled into an elongate horizontal beam (32 and/or 34) to be connected between adjacent floaters 1. In an example, the assembled marine platform 10 may include a plurality of horizontal beams 32, 34 interconnected between a plurality of sets of adjacent floaters 1.

The assembly of the marine platform 10 with a step of segmental match casting may be executed but not restricted to the following steps:
segmental match casting, in a factory or casting yard, a plurality of first segments to be assembled into a hollow, cylindrical floater to be disposed vertically in the marine environment, the assembled marine platform to include a plurality of floaters,
segmental match casting, in the factory or casting yard, a plurality of second segments to be assembled into an elongate horizontal beam to connected between adjacent floaters, the assembled marine platform to include a plurality of horizontal beams,
installing, at the harbor site, at least three guiding piles for each floater at the location of where the floater is to be assembled, to be used as a confining mechanism for confining a first segment into position and supporting the weight thereof by an overhead frame/truss,
transporting the plurality of first segments to the harbor site,
lifting, by use of a floating crane, a first segment that is to be the bottom segment of the to-be-assembled floater into position, guided by the guiding piles, the bottom first segment being floatable under its own weight and the weight of an immediate first segment placed on top of it,
lifting a next first segment onto the bottom first segment and using pre-stressing to join this next first segment to the bottom first segment,
repeating the processes of lifting and joining for subsequent first segments to complete the assembling of the floater, each of the assembled floaters including one or more joints for connection to one or more horizontal beams,
hanging a completed floater so that it extends vertically from the overhead frame/truss and is restrained by the guiding piles,
transporting the plurality of second segments to the harbor site,
assembling the second segments by the use of pre-stressing to join the second segments together so as to form the horizontal beam,
lifting, by use of a floating crane, each formed horizontal beam onto a temporary support on the guiding piles, fixing steel bars in the floaters and horizontal beams and thereafter lapping the steel bars,
casting the joints where ends of horizontal beams meet a floater with in-sit concrete until all beams are fixed to the floaters,
removing the overhead frame/truss and guiding piles,
floating out the assembled marine platform into the marine environment, and
optionally installing a wind turbine on top of one of the floaters of the platform.

Furthermore, in the construction method for the marine platform, a steel platform 10 can be precast in a factory, and further be assembled as a whole in a construction site. Wherein, the method includes the following steps: pre-casting the steel platform supporting the seaborne wind turbines and/or the bridges and/or the marine structures in a factory; assembling the precast steel platform as a whole in the construction site near the port; lifting the whole finished steel platform into water by the floated crane, or sliding the platform into water by a slide; transporting the floated steel platform to the mounting marine area by the sea towage and carrying out the construction of the foundation of the individual pontoons of the steel platform respectively.

### Risk assessment

Classify the risk in terms of the result of the accident. Take the offshore wind farm as an example, the first level of the risk is that the buoyant supporting and fixing platform strikes against ships. The second level of the risk is that, the blades and the towers of the wind turbines are damaged in bad weather. Other kinds of risks include the impact on the navigation, shipping and fishery. The third level of the risk is the earthquake, which may damage the piles. Since the piles in the present application have a small diameter, a new one may easily replace the already damaged one. The latter two can be dealt with conventional methods. For the first level of risk, sufficient warnings and reminding can be set around the wind turbines; and the wind turbines should be painted with bright colors to warn the ships. Similar accidents may be caused by the floated ships which lose their power. Therefore, the marine platform should be designed to withstand the strike of the ships, and thus the buoyant supporting and fixing platform may be damaged only in parts.

### Social benefit and economic benefit

The marine platform (used in the open sea with a water depth of approximately 5m to 50m) can be also extensively applied to the offshore wind-power, marine energy, bridges, marine buildings, artificial piers, artificial island or offshore solar energy and the like. This technique has great economic benefit and strategic significance to the development of the marine industry.

The construction method for the marine platform in this application is economic-efficient, safety, reliable. Besides, the construction method is convenient, and the construction can be fast finished with this method.

The marine platform (used in the open sea with a water depth of approximately 5m to 50m),the buoyant supporting and fixing platform (used in the open sea with a water depth of approximately 10m to 500m), and the marine wind power and marine energy pre-stress lightweight concrete floated platform technique (used in the area with a water depth of approximately 20m to 500m) can be also extensively applied to the offshore green energy, such as offshore solar energy, marine energy, marine bio-energy and the like; and can be also applied to the marine resources (such as marine ranching, marine organism, sea water desalinization and the like), maritime agriculture, marine tourism and real estate of island. This technique has great economic benefit and strategic significance to the development of the offshore green energy, resources and the economy of the island.

It should be understood that, one skilled in the art can make any improvements or modifications which don't depart from the scope of the spirit and the principle of the present invention, and these improvements and modifications should be included within the scope of the present invention.

## Claims

1. A partially floating marine platform for offshore wind-power, bridges and marine buildings, the platform adapted for a water depth greater than 5 meters in a marine environment, comprising:
at least one hollow, cylindrical floater (1) disposed vertically in the marine environment; the marine platform is cast on the seabed with a concrete bed (9) below the bottom of the floater (1); wherein the floater (1) is supported by a partial buoyancy force;
a plurality of small diameter piles are installed at the bottom of the floater, and the piles are penetrated through the concrete bed (9) and the soil stratum (13) and finally socketed into the bedrock (40) or the founding stratum (14);
a single-floater platform comprises a vertically disposed floater (1) and the small diameter piles fixed the bottom of the floaters (1) to form a spatial structure with a signal floater; a spatial structure of a multi-floater platform is formed by connecting a plurality of vertically disposed floaters (1) with horizontal beams, and the small diameter piles fixed to the bottom of the floaters (1);
wherein the marine platform (10) is supporting wind turbines and/or bridges and/or marine buildings.

2. The partially floating marine platform for offshore wind-power, bridges and marine buildings according to claim 1, **characterized in that** the plurality of small diameter piles includes bored piles (2) and driven pipes (27); the bottom the floater (1) has a plurality of circular recess holes (39) formed therein; each bored pile (21) or driven pile (27) is penetrated through the concrete bed (9) and the soil stratum (13) and finally socketed into the bedrock (40) or the founding stratum (14).

3. The partially floating marine platform for offshore wind-power, bridges and marine buildings according to claim 1, **characterized in that** the bottom of the floater (1) is configured into a cone-shape bottom slab (2) or a tenon structure protruded from the bottom.

4. The partially floating marine platform for offshore wind-power, bridges and marine buildings according to claim 1, characterize in that the marine platform (10) further includes at least three floaters (1); wherein one of the floaters is supporting offshore wind turbines.

5. The partially floating marine platform for offshore wind-power, bridges and marine buildings according to claim 3, **characterized in that** a stiffened ring slab (4) is provided at the top of the cone-shaped bottom slab (2).

6. The partially floating marine platform for offshore wind-power, bridges and marine buildings according to claim 1, **characterized in that** the marine platform further includes a regulating tower section (3) vertically disposed at the top of the floater (1).

7. The partially floating marine platform for offshore wind-power, bridges and marine buildings according to claim 6, **characterized in that** the floater (1) and/or the regulating tower section (3) are made from pre-stressed concrete, pre-stressed lightweight concrete, pre-stressed fiber reinforced concrete, pre-stressed concrete filled steel tubes or steel-concrete composite material.

8. The partially floating marine platform for offshore wind-power, bridges and marine buildings according to claim 1, **characterized in that** the interior of the floater (1) is pre-installed with a pressure piping system that comprises a plurality of pressure pipes (37) for pumping high pressure water or cement grout to the bottom water side of the floaters (1); wherein openings (38) at one ends of the pressure pipes (37) extend through the floaters (1), and are connected to a water pump or a concrete/cement grouting plant; openings at the other ends of the pressure pipes (37) are connected to the outside.

9. The partially floating marine platform for offshore wind-power, bridges and marine buildings according to claim 1, **characterized in that**, the floater (1) is filled with water or sand to increase self-weight of the marine platform so as to counter an uplifting force induced by wind loads on the platform.

10. A construction method for installing a partially floating marine platform for offshore wind-power, bridges and marine buildings, the platform adapted for a water depth greater than 5 meters in a marine environment, **characterized in that** the method comprises the following steps:
excavating soft materials at the seabed at a location where the at least one floaters (1) of the platform is to be erected by one of a dredging, sucking, and flushing method so as to form a pothole (15) in the seabed,
pouring wet concrete for forming the concrete bed (9) into the pothole by using one of a gravity or concrete pumping method,
lowering the platform (10) until the cone-shaped bottom slab (2) of the at least one floater (1) is immersed within the concrete bed (9) prior to an initial setting of the wet concrete which forms the concrete bed (9), the cone-shaped bottom slab (2) forming a mirror image,
reverse cone-shaped indentation (11) in the wet concrete of the concrete bed (9),
maintaining position of the platform (10) until the wet concrete which forms the concrete bed (9)is at an initial set where it begins to harden,
flushing out material between the cone-shaped bottom slab (2) and the reverse cone-shaped indentation (11) formed in the concrete bed (9) to separate the two and create a gap therebetween by pressure pipes (37), raising the platform (10) upon completion of the flushing step,
lowering the platform (10) a second time so that the cone-shaped bottom slab contacts the reverse cone-shaped indentation (11) formed in the concrete bed (9) within the seabed with the gap therebetween, and
pressure grouting the gap between meeting surfaces of the cone-shaped bottom slab of the at least one floater and reverse cone-shaped indentation formed in the concrete bed so as to finally fix the marine platform to the concrete bed (9);
wherein a piling support arrangement extending vertically between the at least one floater and bedrock beneath the seabed is provided; wherein the providing steps include:
installing a plurality of small diameter bored piles (21) having a diameter of 300mm∼400mm or small diameter driven piles (27) using known boring and driving piling technology down through the interior of the at least one floater and through a plurality of recessed holes (39) formed in the cone-shaped bottom slab (2) of the floater so that lower ends of the piles penetrate through the concrete bed (9) on the seabed, soil stratum between the seabed and bedrock, to be finally socketed into the bedrock(40);
dewatering the interior of the floater (1) by pumping, or by forming a concrete plug at the lower end therein to stop water seepage prior to dewatering for a dry working environment;
cutting upper ends of the piles to level in preparation for a known casting procedure to form a pile cap within the interior of the floater at a lower end thereof for securing the upper ends of the piles therein, an inner wall at floater lower end having a plurality of bar connectors embedded therein,
arranging a plurality of horizontally extending reinforcement bars for the pile cap between the embedded bar connectors in the inner wall and lapping steel bar at connection points between ends of the reinforcement bars and bar connectors, and
casting the pile cap within the floater to complete installation of the piling support arrangement.

11. A construction method for installing a partially floating marine platform for offshore wind-power, bridges and marine buildings, the platform adapted for a water depth greater than 5 meters in a marine environment, **characterized in that** the method comprises the following steps:
floating the marine platform (10) into position within the marine environment such that the at least one floater of the platform (10) hovers at a desired location above soft material in the seabed,
flushing the soft material away at the desired location using the high pressure water jets through pipes (37) in the pressure piping system until a founding stratum (14) is reached, thereby forming a pothole (15) which exposes the founding stratum in the seabed,
lowering the marine platform (10) further within the marine environment so that it is directly over the pothole (15) formed in the seabed,
pouring wet concrete for forming the concrete bed (9) into the pothole (15) using one of a gravity or concrete pumping method,
continue lowering the platform (10) until the cone-shaped bottom slab (2) of the at least one floater (1) is immersed within the concrete bed (9) prior to an initial setting of the wet concrete which forms the concrete bed (9), the cone-shaped bottom slab (2) forming a mirror image, reverse cone-shaped indentation (11) in the wet concrete of the concrete bed (9),
maintaining position of the platform (10) until the wet concrete which forms the concrete bed (9) is at an initial set where it begins to harden,
flushing out material between the cone-shaped bottom slab (2) and the reverse cone-shaped indentation (11) formed in the concrete bed (9) using the high pressure water jets through pipes (37) in the pressure piping system to separate the two and create a gap therebetween,
raising the platform (10) upon completion of the flushing out step,
lowering the platform (10) again so that the cone-shaped bottom slab (2) contacts the reverse cone-shaped indentation (11) formed in the concrete bed (9) within the seabed with the gap therebetween, and
pressure grouting the gap between meeting surfaces of the cone-shaped bottom slab (2) of the at least one floater (1) and reverse cone-shaped indentation (11) formed in the concrete bed using pipes in the pressure piping system so as to finally fix the marine platform (10) to the concrete bed;
wherein a piling support arrangement extending vertically between the at least one floater and bedrock beneath the seabed is provided; wherein the providing steps include:
installing a plurality of small diameter bored piles (21) having a diameter of 300mm∼400mm or small diameter driven piles (27) using known boring and driving piling technology down through the interior of the at least one floater and through a plurality of recessed holes (39) formed in the cone-shaped bottom slab (2) of the floater so that lower ends of the piles penetrate through the concrete bed (9) on the seabed, soil stratum between the seabed and bedrock, to be finally socketed into the bedrock(40);
dewatering the interior of the floater (1) by pumping, or by forming a concrete plug at the lower end therein to stop water seepage prior to dewatering for a dry working environment;
cutting upper ends of the piles to level in preparation for a known casting procedure to form a pile cap within the interior of the floater at a lower end thereof for securing the upper ends of the piles therein, an inner wall at floater lower end having a plurality of bar connectors embedded therein,
arranging a plurality of horizontally extending reinforcement bars for the pile cap between the embedded bar connectors in the inner wall and lapping steel bar at connection points between ends of the reinforcement bars and bar connectors, and
casting the pile cap within the floater to complete installation of the piling support arrangement.

12. A construction method for installing a partially floating marine platform for offshore wind-power, bridges and marine buildings, the platform adapted for a water depth greater than 5 meters in a marine environment, **characterized in that** the method comprises the following steps:
excavating soft materials at the seabed at a location where the at least one floaters (1) of the platform is to be erected by one of a dredging, sucking, and flushing method so as to form a pothole (15) in the seabed,
pouring wet concrete for forming the concrete bed (9) into the pothole (15) using one of a gravity or concrete pumping method,
continue lowering the platform (10) until the cone-shaped bottom slab (2) of the at least one floater (1) is immersed within the concrete bed (9) prior to an initial setting of the wet concrete which forms the concrete bed (9), the cone-shaped bottom slab (2) forming a mirror image, reverse cone-shaped indentation (11) in the wet concrete of the concrete bed (9),
maintaining position of the platform (10) until the wet concrete which forms the concrete bed (9) is at an initial set where it begins to harden,
flushing out material between the cone-shaped bottom slab (2) and the reverse cone-shaped indentation (11) formed in the concrete bed (9) using the high pressure water jets through pipes (37) in the pressure piping system to separate the two and create a gap therebetween,
raising the platform (10) upon completion of the flushing out step,
lowering the platform (10) again so that the cone-shaped bottom slab (2) contacts the reverse cone-shaped indentation (11) formed in the concrete bed (9) within the seabed with the gap therebetween, and
pressure grouting the gap between meeting surfaces of the cone-shaped bottom slab (2) of the at least one floater (1) and reverse cone-shaped indentation (11) formed in the concrete bed using pipes in the pressure piping system so as to finally fix the marine platform (10) to the concrete bed;
wherein a piling support arrangement extending vertically between the at least one floater and bedrock beneath the seabed is provided; wherein the providing steps include:
installing a plurality of small diameter bored piles (21) having a diameter of 300mm∼400mm or small diameter driven piles (27) using known boring and driving piling technology down through the interior of the at least one floater and through a plurality of recessed holes (39) formed in the cone-shaped bottom slab (2) of the floater so that lower ends of the piles penetrate through the concrete bed (9) on the seabed, soil stratum between the seabed and bedrock, to be finally socketed into the bedrock(40);
dewatering the interior of the floater (1) by pumping, or by forming a concrete plug at the lower end therein to stop water seepage prior to dewatering for a dry working environment;
cutting upper ends of the piles to level in preparation for a known casting procedure to form a pile cap within the interior of the floater at a lower end thereof for securing the upper ends of the piles therein, an inner wall at floater lower end having a plurality of bar connectors embedded therein,
arranging a plurality of horizontally extending reinforcement bars for the pile cap between the embedded bar connectors in the inner wall and lapping steel bar at connection points between ends of the reinforcement bars and bar connectors, and
casting the pile cap within the floater to complete installation of the piling support arrangement.

13. The construction method for installing a partially floating marine platform for offshore wind-power, bridges and marine buildings according to any one of claims 10-12, **characterized in that** after fixed to the seabed, the floater (1) is ballasted by filling the hollow interior thereof with water or sand.

14. The construction method for installing a partially floating marine platform for offshore wind-power, bridges and marine buildings according to any one of claims 10-12, **characterized in that** a steel ring is tightly adhered onto the inner wall of the pothole, wherein at least one rebar is integrated into the steel ring.

15. The construction method for installing a partially floating marine platform for offshore wind-power, bridges and marine buildings according to any one of claims 10-12, **characterized in that** a rubble wall is further formed by dumping stones around the pothole (15) to contain the concrete poured for forming the concrete bed (9).

16. The construction method for installing a partially floating marine platform for offshore wind-power, bridges and marine buildings according to any one of claims 10-12, **characterized in that** the construction method further includes producing the pre-stressed concrete or pre-stressed light concrete or pre-stressed fiber reinforced concrete platform (10) using a segmental match casting construction method, which includes:
assembling the floater (1) with the segmental match casting construction method in a factory or casting yard;
transporting the floater (1) to the harbor site;
floating out the floater to the marine environment, and carrying out the construction of the foundation of the platform.

17. The construction method for installing a partially floating marine platform for offshore wind-power, bridges and marine buildings according to claims 10-12, **characterized in that** the construction method further includes producing the pre-stressed concrete or pre-stressed light concrete or pre-stressed fiber reinforced concrete platform (10) using an in-situ concrete casting construction method, which includes:
segmental match casting, in a factory or casting yard, a plurality of first segments to be assembled into a hollow, cylindrical floater to be disposed vertically in the marine environment, the assembled marine platform to include a plurality of floaters,
segmental match casting, in the factory or casting yard, a plurality of second segments to be assembled into an elongate horizontal beam to connected between adjacent floaters, the assembled marine platform to include a plurality of horizontal beams,
installing, at the harbor site, at least three guiding piles for each floater at the location of where the floater is to be assembled, to be used as a confining mechanism for confining a first segment into position and supporting the weight thereof by an overhead frame/truss,
transporting the plurality of first segments to the harbor site, lifting, by use of a floating crane, a first segment that is to be the bottom segment of the to-be-assembled floater into position, guided by the guiding piles, the bottom first segment being floatable under its own weight and the weight of an immediate first segment placed on top of it,
lifting a next first segment onto the bottom first segment and using pre-stressing to join this next first segment to the bottom first segment,
repeating the processes of lifting and joining for subsequent first segments to complete the assembling of the floater, each of the assembled floaters including one or more joints for connection to one or more horizontal beams,
hanging a completed floater so that it extends vertically from the overhead frame/truss and is restrained by the guiding piles,
transporting the plurality of second segments to the harbor site,
assembling the second segments by the use of pre-stressing to join the second segments together so as to form the horizontal beam,
lifting, by use of a floating crane, each formed horizontal beam onto a temporary support on the guiding piles,
fixing steel bars in the floaters and horizontal beams and thereafter lapping the steel bars,
casting the joints where ends of horizontal beams meet a floater with in-situ concrete until all beams are fixed to the floaters,
removing the overhead frame/truss and guiding piles,
floating out the assembled marine platform into the marine environment, and
optionally installing a wind turbine on top of one of the floaters of the platform.

18. The construction method for installing a partially floating marine platform for offshore wind-power, bridges and marine buildings according to any one of claims 10-12, **characterized in that** a hole with a diameter of 45-55mm is defined in the cone-shaped bottom slab (2) of the floater (1); wherein the hole extends through the concrete bed (9), and has a rebar inserted therein; the hole is further poured with wet concrete.

19. The construction method for installing a partially floating marine platform for offshore wind-power, bridges and marine buildings according to any one of claims 10-12, **characterized in that** the platform with a plurality of floaters is connected together with horizontal beams to form a multi-floater platform.
